**Europäisches Patentamt**

**European Patent Office**

**Office européen des brevets**

(19)

(11) **EP 1 515 126 A1**

(12) **EUROPÄISCHE PATENTANMELDUNG**

(43) Veröffentlichungstag:
**16.03.2005  Patentblatt 2005/11**

(51) Int Cl.7: **G01J 3/45**

(21) Anmeldenummer: **03405676.2**

(22) Anmeldetag: **15.09.2003**

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(71) Anmelder: **ABB RESEARCH LTD.
8050 Zürich (CH)**

(72) Erfinder:
• **Bohnert, Klaus
5452 Oberrohrdorf (CH)**

• **Brändle, Hubert
8102 Oberengstringen (CH)**

(74) Vertreter: **ABB Patent Attorneys
c/o ABB Schweiz AG,
Intellectual Property (CH-LC/IP),
Brown Boveri Strasse 6
5400 Baden (CH)**

(54) **Elektrooptisches Fourier-Transform-Spektrometer**

(57)      Das Spektrometer umfasst eine Lichtquelle (Q) zur Erzeugung eines einen Lichtweg (L) beschreibenden Lichtstrahles (L) aus kollimiertem polychromatischen Licht (L), ein Teilstrahlerzeugungsmittel (9), durch welches das Licht (L) in zwei linear polarisierte Teilstrahlen (L1,L2) zerlegbar ist, eine Detektions-Auswerte-Einheit (12) zur Detektion des Lichtes (L; L1,L2), zur Erzeugung eines Interferogramms durch Messung der Intensität des Lichtes als Funktion eines Wegunterschiedes Δs zwischen den zwei Teilstrahlen (L1,L2) und zur Bestimmung eines Spektrums mittels einer Fourier-Transformation des Interferogramms. Es kennzeichnet sich dadurch, dass zur Erzeugung des Wegunterschiedes Δs zwischen den zwei Teilstrahlen (L1,L2) mindestens ein elektrooptisches Element (5) auf dem Lichtweg (L) angeordnet ist, welches zur Erzeugung eines veränderbaren elektrischen Feldes E in dem mindestens einen elektrooptischen Element (5) mit einer veränderbaren elektrischen Spannung V beaufschlagbar ist. Vorteilhaft ist das Fourier-Transform-Spektrometer einarmig ausgebildet, wobei der Wegunterschied zwischen zwei orthogonal zueinander polarisierten Lichtwellen (L1,L2) induziert wird.

**Fig. 2**

**Beschreibung**

Technisches Gebiet

Die Erfindung bezieht sich auf das Gebiet der optischen Spektroskopie, insbesondere auf die Fourier-Transform-Spektroskopie. Sie bezieht sich auf ein Fourier-Transform-Spektrometer und auf ein Spektroskopie-Verfahren gemäss dem Oberbegriff der unabhängigen Patentansprüche.

Stand der Technik

Fourier-Transform-Spektrometer (FTS) sind bereits seit vielen Jahrzehnten bekannt und werden beispielsweise zur qualitativen und quantitativen Bestimmung von chemischen Zusammensetzungen eingesetzt. Gewöhnlich wird dabei das Absorptionsspektrum einer zu analysierenden Probe im infraroten Wellenlängenbereich gemessen. Der optische Aufbau eines herkömmlichen FTS entspricht im wesentlichen dem eines Michelson-Interferometers. Es weist zwei Arme auf, die dadurch gebildet werden, dass Licht einer Lichtquelle mittels eines Strahlteilers in zwei Teilstrahlen aufgeteilt wird, wobei die Teilstrahlen jeweils an einem Spiegel am Ende des jeweiligen Armes reflektiert und an dem Strahlteiler wieder zusammengeführt werden. Zur Änderung des optischen Wegunterschiedes zwischen den beiden Teilstrahlen wird mindestens einer der Spiegel entlang der Strahlrichtung bewegt. Die Lichtintensität der zwei wieder zusammengeführten, interferierenden Teilstrahlen wird mittels eines Detektors detektiert. Diese Lichtintensität, aufgezeichnet in Abhängigkeit des Wegunterschiedes, stellt ein Interferogramm dar. Das zu bestimmende optische Spektrum, beispielsweise einer im Lichtweg angeordneten gasförmigen Probe, wird über eine Fourier-Transformation aus dem Interferogramm bestimmt.

Gegenüber anderen Spektrometern haben FTS den Vorteil, dass während des ganzen Messvorgangs die volle Lichtleistung am Detektor zur Verfügung steht. Im Unterschied dazu wird bei einem konventionellen, dispersiven Spektrometer zu einem gegebenen Zeitpunkt immer nur ein kleiner Ausschnitt aus dem Spektrum detektiert. Die spektrale Auflösung eines FTS wird im allgemeinen in $cm^{-1}$ angegeben und beträgt $1/\Delta s$, wobei $\Delta s$ den maximalen Wegunterschied in cm darstellt. In der Praxis kann man mit Wegunterschieden bis in den Bereich von 1 m arbeiten, womit ausserordentlich hohe Auflösungen erreicht werden.

Grundlagen und weitere Details zur Fourier-Transform können beispielsweise dem Buch P.R. Griffiths, "Chemical infrared Fourier transform spectroscopy", John Wiley, New York 1975 und der Veöffentlichung E.V. Loewenstein, "The history and current status of Fourier transform spectroscopy", Appl. Optics, 5, 845, 1966 entnommen werden.

In der Patentschrift US 5 157 458 ist ein einarmiges FTS beschrieben. Statt den optischen Wegunterschied zwischen zwei verschiedenen Armen des FTS zu verändern, wird in dem einarmigen FTS der optische Wegunterschied zwischen zwei sich im wesentlichen parallel zueinander ausbreitenden Lichtstrahlen unterschiedlicher linearer Polarisation variiert. Dazu beinhaltet das einarmige Polarisations-FTS zwei keilförmige doppelbrechende Kristalle, die gegeneinander bewegbar angeordnet sind. Diese optischen Keile sind derart geformt und angeordnet, dass sie sich ungefähr zu einem Quader ergänzen, wobei die gegenseitige Verschiebung der Keile entlang zweier sich gegenüberstehender und parallel zueinander angeordneter Flächen der Keile stattfindet. Zur Polarisation des Lichtes beinhaltet das FTS zwei Polarisatoren, von denen einer als Analysator wirkt. Ebenfalls im Lichtweg angeordnet ist ein als Kompensator wirkender planparalleler doppelbrechender Kristall, durch welchen ein konstanter Wegunterschied zwischen den orthogonalen Polarisationen eingeführt wird, so dass der gesamte Wegunterschied sich beim Verschieben der beiden Keile beispielsweise zwischen Null und einem Maximalwert verändert.

Die genannten FTS haben den Nachteil, dass sie mechanisch relativ empfindlich sind. Ausserdem ist mit den genannten FTS nur eine relativ geringe Zeitauflösung zu erreichen.

Aus dem Stand der Technik sind seit Jahrzehnten elektrooptische Modulatoren bekannt, durch welche beispielsweise Laserlicht in seiner Intensität moduliert werden kann oder elektrische Spannungen gemessen werden können (elektrooptische Spannungssensoren). Dabei moduliert eine am Kristall anliegende Spannung die differentielle Phase zweier orthogonal polarisierter Wellen innerhalb eines Winkelbereichs von $\pm\pi/2$. Der Winkelbereich, in dem die Phasenmodulation stattfindet, beträgt im allgemeinen maximal eine halbe Lichtwellenlänge. Werden die beiden Wellen an einem Polarisator zur Interferenz gebracht, kann die Lichtleistung je nach Phase zwischen Null und einem Maximalwert variiert werden. Eine Phasenmodulation um mehr als $\pm\pi/2$ ist nicht sinnvoll, da dadurch keine anderen Lichtleistungen erreichbar sind. Umgekehrt kann auch aus der Lichtleistung die Phase und daraus eine zu messende Spannung ermittelt werden. In diesem Fall ist eine Phasenmodulation um mehr als $\pm\pi/2$ ist nicht erwünscht und möglichst zu vermeiden, da sich dadurch keine eindeutigen, sondern mehrdeutige Spannungswerte ergeben.

Darstellung der Erfindung

Es ist deshalb Aufgabe der Erfindung, ein Spektrometer und ein Spektroskopieverfahren der eingangs genannten Art zu schaffen, welche die oben genannten Nachteile nicht aufweisen. Insbesondere soll ein Fourier-Transform-Spektrometer geschaffen werden, welches mechanisch robust ist und Messungen mit hoher Zeitauflösung ermöglicht.

Diese Aufgabe lösen eine Vorrichtung und ein Verfahren mit den Merkmalen der unabhängigen Patentansprüche.

Ein erfindungsgemässes Spektrometer umfasst

- eine Lichtquelle zur Erzeugung eines einen Lichtweg beschreibenden Lichtstrahles aus kollimiertem polychromatischen Licht,
- ein Teilstrahlerzeugungsmittel, durch welches das Licht in zwei linear polarisierte Teilstrahlen zerlegbar ist, und
- eine Detektions-Auswerte-Einheit zur Detektion des Lichtes, zur Erzeugung eines Interferogramms durch Messung der Intensität des Lichtes als Funktion eines Wegunterschiedes As zwischen den zwei Teilstrahlen und zur Bestimmung eines Spektrums mittels einer Fourier-Transformation des Interferogramms.

Es ist dadurch gekennzeichnet, dass zur Erzeugung des Wegunterschiedes $\Delta s$ zwischen den zwei Teilstrahlen mindestens ein elektrooptisches Element auf dem Lichtweg angeordnet ist, welches zur Erzeugung eines veränderbaren elektrischen Feldes E in dem mindestens einen elektrooptischen Element mit einer veränderbaren elektrischen Spannung V beaufschlagbar ist.

Dadurch, dass mittels eines elektrooptischen Elements, beispielsweise eines elektrooptischen Kristalls, der Wegunterschied As erzeugt wird, bedarf es keiner beweglichen Teile in dem Fourier-Transform-Spektrometer (FTS). Dadurch ist es mechanisch sehr robust ausführbar. Da elektrische Spannungen, wie sie zur Erzeugung der das elektrische Feld E erzeugenden Spannung V verwendet werden, mit hoher Frequenz veränderbar sind, kann der Wegunterschied $\Delta s$ sehr schnell verändert werden. Dadurch können optische Spektren in rascher Folge und somit Messungen mit sehr hoher Zeitauflösung durchgeführt werden. Die typischerweise rechnergestützte Detektions-Auswerte-Einheit kann für eine entsprechend rasche Datenaufnahme und/oder Spektrenerzeugung ausgelegt werden. Es sind Zeitauflösungen im $\mu s$-Bereich und bis in den ns-Bereich realisierbar.

Durch den Einsatz geeigneter elektrooptisch aktiver Materialien und grosser Spannungen ist eine spektrale Auflösung erzielbar, die für viele spektroskopische Anwendungen ausreichend ist. Bereits ohne besondere Vorkehrungen sind Wegunterschiede im Bereich 10 $\mu m$ bis 100 $\mu m$ erzielbar, die durch bevorzugte Ausführungsformen noch deutlich vergrösserbar sind.

Bevorzugt ist das mindestens eine elektrooptische Element im wesentlichen ein elektrooptisch aktiver Kristall oder ein elektrooptischer Wellenleiter. Geeignete elektrooptisch aktive Kristalle zeigen einen grossen Effekt, das heisst für den Kristall ist das Produkt $n_0^3(\lambda)\, r(\lambda)$ gross, wobei $n_0$ der Brechungsindex für verschwindendes elektrisches Feld (E = 0) ist, $\lambda$ die Lichtwellenlänge und r das massgebliche Tensorelement des elektrooptischen Tensors des elektrooptischen Materials ist. Ein elektrooptischer Wellenleiter, beispielsweise auf Basis von Lithiumnionbat, hat den Vorteil, dass er besonders gut in einem zumindest teilweise faseroptisch realisierten Spektrometer einsetzbar ist. Mittels eines elektrooptischen Wellenleiters, einer breitbandigen Faser-Lichtquelle und faseroptischen Verbindungen lässt sich ein robustes und kleines, flexibles Spektrometer realisieren, das bis auf die Detektions-Auswerte-Einheit komplett faseroptisch aufgebaut ist. Das Licht kann auch mit wenig Verlust über weite Strecken geführt werden, so dass verschiedene Komponenten des FTS an weit voneinander entfernten Orten anordnbar sind.

In einer weiteren Ausführungsform ist eine Vielzahl von elektrooptischen Elementen auf dem Lichtweg angeordnet. Dadurch kann eine grössere spektrale Auflösung erreicht werden. Dies ist besonders wichtig, wenn von dem gewünschten elektrooptischen Material nur relativ kleine Kristalle erhältlich oder herstellbar sind.

In einer bevorzugten Ausführungsform ist das mindestens eine elektrooptische Element derart geformt oder verspiegelt, dass das Licht innerhalb des mindestens einen elektrooptischen Elements mehrfach reflektiert wird. Dadurch kann eine verbesserte Auflösung erreicht werden. Der Lichtstrahl kann auf diese Weise mehrfach das elektrooptische Element ganz oder teilweise durchlaufen, so dass eine Strecke D, auf der das Licht den elektrooptischen Effekt erfährt, grösser, insbesondere um ein Vielfaches grösser ist als die physikalische Länge des elektrooptischen Elementes oder die Weglänge, die das Licht bei einem einfachen Durchlaufen des elektrooptischen Elementes in diesem zurücklegte. Entsprechend ist der Wegunterschied $\Delta s$ grösser. Das Anbringen von Verspiegelungen an dem elektrooptischen Element ist möglich; besonders elegant ist es aber, das elektrooptische Element so auszugestalten, dass die Reflexionen durch Totalreflexion zustandekommen.

Besonders vorteilhaft in dieser bevorzugten Ausführungsform ist es, wenn das Licht in dem mindestens einen elektrooptischen Element derart reflektierbar ist, dass der Lichtstrahl in sich selbst reflektiert wird. Dadurch wird eine Verdopplung der Strecke D, auf der das Licht den elektrooptischen Effekt erfährt, möglich, so dass eine deutlich verbesserte Auflösung erreicht wird.

Vorteilhaft beinhaltet das mindestens eine elektrooptische Element ein kristallines elektrooptisch aktives Material einer der Kristallklassen 4, 422, 4mm, 42m, 4, 6, 622, 6mm, 23 und 43m. Kristalle dieser Kristallklassen haben die vorteilhafte Eigenschaft, dass bei ihnen die Richtung der feld-induzierten Achsen der Doppelbrechung unabhängig von der Feldstärke E ist.

Eine vorteilhafte Ausführungsform ist dadurch gekennzeichnet, dass das mindestens eine elektrooptische Element ein kristallines elektrooptisch aktives Material der kubischen Kristallklasse 4̱3m beinhaltet, dass das elektrische Feld E parallel zu einer [1,1,0]-Richtung des elektrooptisch aktiven Materials verlaufend ist, und dass der Lichtweg in dem mindestens einen elektrooptischen Element zumindest teilweise entlang einer [1,-1,0]-Richtung des kristallinen elektrooptisch aktiven Materials verlaufend ist. In dieser Anordnung wird für eine gegebene Strecke D und eine gegebene Feldstärke E der für Kristalle dieser Klasse der grösstmögliche Wegunterschied $\Delta$s und somit die höchste Auflösung erreicht. Kristalle der Kristallklasse 4̱3m haben den Vorteil, dass sie keine feldunabhängige (natürliche) Doppelbrechung aufweisen.

In einer weiteren vorteilhaften Ausführungsform ist das Licht zumindest teilweise in einer optischen Faser geführt. Dadurch sind verschiedene Komponenten des FTS an weit voneinander entfernten Orten anordnbar. Insbesondere können die Detektions-Auswerte-Einheit und/oder die Lichtquelle und/oder das elektrooptische Element weit voneinander entfernt und/oder weit von einer zu untersuchenden, auf dem Lichtweg angeordneten Probe entfernt angeordnet sein.

Es ist auch möglich, das Licht aufzuteilen und mit mehreren zu untersuchenden Proben wechselwirken zu lassen und dann, beispielsweise mittels optischer Fasern, das Licht einer entsprechenden Anzahl von Detektoren zuzuführen.

Eine sehr vorteilhafte Ausführungsform ist dadurch gekennzeichnet, dass mindestens ein erstes elektrooptisches Element und mindestens ein zweites elektrooptisches Element auf dem Lichtweg angeordnet sind, welche eine feldunabhängige Doppelbrechung aufweisen, und welche zur Erzeugung von veränderbaren elektrischen Feldern E beziehungsweise E' in dem ersten elektrooptischen Element beziehungsweise in dem zweiten elektrooptischen Element mit veränderbaren elektrischen Spannungen V beziehungsweise V' beaufschlagbar sind, und welche elektrooptischen Elemente gleiche optische und elektrooptische Eigenschaften aufweisen, wobei eine kristalline Orientierung der elektrooptischen Elemente und eine Orientierung der elektrischen Felder E,E' derart gewählt ist, dass Veränderungen des Lichts, die durch die feldunabhängige Doppelbrechung in dem ersten elektrooptischen Element hervorgerufen werden, Veränderungen des Lichts, die durch die feldunabhängige Doppelbrechung in dem zweiten elektrooptischen Element hervorgerufen werden, kompensieren.

Viele elektrooptisch aktive Materialien weisen auch schon ohne ein elektrisches Feld eine natürliche Doppelbrechung auf. Diese ist oft grösser als die feldinduzierte Doppelbrechung. Um den Einfluss dieser natürlichen, feldunabhängigen Doppelbrechung zu eliminieren, können die zwei elektrooptischen Elemente und die elektrischen Felder in den elektrooptischen Elementen in geeigneter Weise angeordnet werden. Wenn beispielsweise das Licht sich im Bereich der elektrooptischen Elemente geradlinig ausbreitet, so kann man zur Erzielung der genannten Kompensation zwei gleichartige elektrooptische Kristalle verwenden, den zweiten Kristall gegenüber dem ersten um Strahlrichtung um +90° drehen und in den beiden Kristallen gleich grosse elektrische Felder erzeugen, wobei aber das Feld in dem zweiten Kristall gegenüber dem in dem ersten Kristall um -90° gedreht ist.

Eine weitere vorteilhafte Ausführungsform mit verbesserter Auflösung kennzeichnet sich dadurch, dass das mindestens eine elektrooptische Element ein elektrooptisch aktives Material beinhaltet, welches mindestens eine akustische Resonanzfrequenz aufweist, und dass die Spannung V mit einer Frequenz verändert wird, die einer solchen akustischen Resonanzfrequenz entspricht. Denn zu der elektrooptischen Brechungsindexänderung kommt dann, infolge des inversen piezoelektrischen Effektes, eine merkliche elasto-optische Brechungsindexänderung hinzu, welche den Wegunterschied $\Delta$s vergrössert, wodurch eine verbesserter Auflösung erreicht wird.

Eine besonders bevorzugte Ausführungsform kennzeichnet sich dadurch, dass die zwei Teilstrahlen zueinander orthogonal polarisierte Teilstrahlen sind, und dass ein als Analysator wirkender Polarisator auf dem Lichtweg nach dem mindestens einen elektrooptischen Element angeordnet ist. In diesem Fall kann ein einarmiges und darum mechanisch besonders stabiles FTS realisiert werden. Ausserdem kann das FTS besonders kompakt ausgeführt sein. Beide Teilstrahlen beschreiben denselben Lichtweg, wobei aufgrund der elektrooptisch induzierten Doppelbrechung in dem elektrooptischen Element ein Wegunterschied zwischen den orthogonal zueinander polarisierten Teilstrahlen erzeugt wird. Als Lichtquelle dient vorteilhaft ein Lichterzeuger und ein erster Polarisator, so dass linear polarisiertes Licht erzeugt wird. Die Zerlegung des linear polarisierten Lichts in die zwei linear polarisierten Teilstrahlen wird dadurch realisiert, dass die Durchlassrichtung des ersten Polarisators mit den elektrooptisch induzierten Achsen des elektrooptischen Elements einen von 0° und von Vielfachen von 90° verschiedenen, vorteilhaft etwa 45° betragenden Winkel bildet. In dem als Analysator wirkenden Polarisator werden die Teilstrahlen zur Interferenz gebracht. Der Analysator ist unter etwa 45° zu den elektrooptisch induzierten Achsen des elektrooptischen Elements ausgerichtet (die Durchlassrichtungen der beiden Polarisatoren bilden einen Winkel von entweder 0° oder 90°). Ein weiterer Vorteil eines solchen einarmigen FTS ist, dass eine eventuelle Verzerrung der Wellenfronten der beiden linear polarisierten Lichwellen, beispielsweise aufgrund von unebenen Oberflächen, für die beiden interferierenden Lichwellen gewöhnlich gleich ist. Bei zweiarmigen FTS durchlaufen die interferierenden Strahlen getrennte Wege und können deshalb unterschiedlich beeinflusst werden, beispielsweise durch eine Fehlorientierung der Spiegel.

Eine andere Ausführungsform kennzeichnet sich dadurch, dass das Teilstrahlerzeugungsmittel einen Strahlteiler beinhaltet, der derart im Lichtweg angeordnet ist, dass die zwei Teilstrahlen zwei voneinander verschiedene Teil-Lichtwege beschreiben, wobei jeder der zwei Teil-Lichtwege zur Reflexion des jeweiligen Teil-Lichtstrahls einen Spiegel beinhaltet, wobei die zwei Teil-Lichtstrahlen zur Interferenz bringbar sind, und wobei das mindestens eine elektrooptische Element in einem der zwei Teil-Lichtwege angeordnet ist.

In dieser Ausführungsform weist das FTS zwei Arme auf, wobei in mindestens einem der Arme ein elektrooptisches Element angeordnet ist, mittels welchem ein Wegunterschied zwischen den Teilstrahlen erzeugbar ist. Die gegenseitige Orientierung der linearen Polarisationen der zwei Teilstrahlen kann hier beliebig sein und ist vorteilhaft parallel. Im Falle von paralleler Polarisation kommen die Teilstrahlen nach Durchlaufen des jeweiligen Armes an dem Strahlteiler zur Interferenz.

In dieser Ausführungsform ist es besonders vorteilhaft, wenn mindestens ein zweites elektrooptisches Element aufgewiesen wird, wobei in einem ersten der zwei der Teil-Lichtwege das mindestens eine elektrooptische Element und in dem zweiten der zwei der Teil-Lichtwege das mindestens eine zweite elektrooptische Element angeordnet ist. So ist in jedem der zwei Arme mindestens ein elektrooptisches Element angeordnet, wodurch ein grösserer Wegunterschied $\Delta s$ realisiert wird. Ausserdem können beide Arme gleichartig aufgebaut sein, so dass aufgrund der Symmetrie der Anordnung eine verbesserte Stabilität des FTS erreicht wird.

Besonders vorteilhaft ist es in dieser Ausführungsform, wenn das zweite elektrooptische Element mit einer veränderbaren Spannung V' beaufschlagbar ist, welche betragsmässig gleich gross ist wie die veränderbare Spannung V. Auf diese Weise kann der Wegunterschied bei entsprechend gepolten Spannungen V,V' genau doppelt so gross gemacht werden wie wenn nur an einem der elektrooptischen Elemente eine der Spannungen anläge. In dieser Ausführungsform genügt eine einzige Spannungsquelle für die beiden elektrooptischen Elemente.

Das erfindungsgemässe Verfahren zur Bestimmung eines optischen Spektrums, wobei aus einem Lichtstrahl kollimierten polychromatischen Lichts zwei linear polarisierte Teilstrahlen erzeugt werden, wobei zwischen den beiden Teilstrahlen ein veränderbarer Wegunterschied As erzeugt wird, und wobei mittels einer Detektions-Auswerte-Einheit

- der Lichtstrahl detektiert wird,
- ein Interferogramm erzeugt wird, indem die detektierte Intensität des Lichtstrahles als Funktion des Wegunterschiedes As zwischen den zwei Teilstrahlen gemessen wird und
- das optische Spektrum bestimmt wird, indem das Interferogramm fourier-transformiert wird,

ist dadurch gekennzeichnet, dass der Wegunterschied $\Delta s$ zumindest teilweise durch mindestens ein auf dem Lichtweg angeordnetes elektrooptisches Element erzeugt wird, welches elektrooptische Element zur Erzeugung eines veränderbaren elektrischen Feldes E in dem mindestens einen elektrooptischen Element mit einer veränderbaren elektrischen Spannung V beaufschlagt wird.

Die Vorteile des Verfahrens und die weiteren vorteilhaften und bevorzugten Verfahren sowie deren Vorteile ergeben sich aus dem oben geschriebenen.

Weitere bevorzugte Ausführungsformen und Vorteile gehen aus den abhängigen Patentansprüchen und den Figuren hervor.

Kurze Beschreibung der Zeichnungen

Im folgenden wird der Erfindungsgegenstand anhand von bevorzugten Ausführungsbeispielen, welche in den beiliegenden Zeichnungen dargestellt sind, näher erläutert. Es zeigen schematisch:

| | |
|---|---|
| Fig. 1 | ein erfindungsgemässes zweiarmiges Fourier-Transform-Spektrometer; |
| Fig. 2 | ein erfindungsgemässes einarmiges Fourier-Transform-Spektrometer; |
| Figs. 3a,3b,3c,3d,3e | Veranschaulichungen möglicher relativer Orientierungen von Kristall-Hauptachsen, Strahlrichtung und Feldrichtung; |
| Figs. 4,5,6,7 | Veranschaulichungen verschiedener Konfigurationen von Kristall-Orientierung, Feldrichtung und Polarisation; |
| Figs. 8,9 | ein einarmiges Fourier-Transform-Spektrometer mit Mehrfachreflexionen im elektrooptischen Element; |
| Fig. 10 | eine Konfiguration für Mehrfachreflexionen im elektrooptischen Element; |
| Fig. 11 | eine Konfiguration zur Kompensation feldunabhängiger Doppelbrechung; |
| Fig. 12 | eine Veranschaulichung eines vorteilhaften Strahlprofils im elektrooptischen Element. |

Die in den Zeichnungen verwendeten Bezugszeichen und deren Bedeutung sind in der Bezugszeichenliste zusammengefasst aufgelistet. Grundsätzlich sind in den Figuren gleiche oder gleichwirkende Teile mit gleichen Bezugszeichen versehen. Die beschriebenen Ausführungsbeispiele stehen beispielhaft für den Erfindungsgegenstand und haben keine beschränkende Wirkung.

Wege zur Ausführung der Erfindung

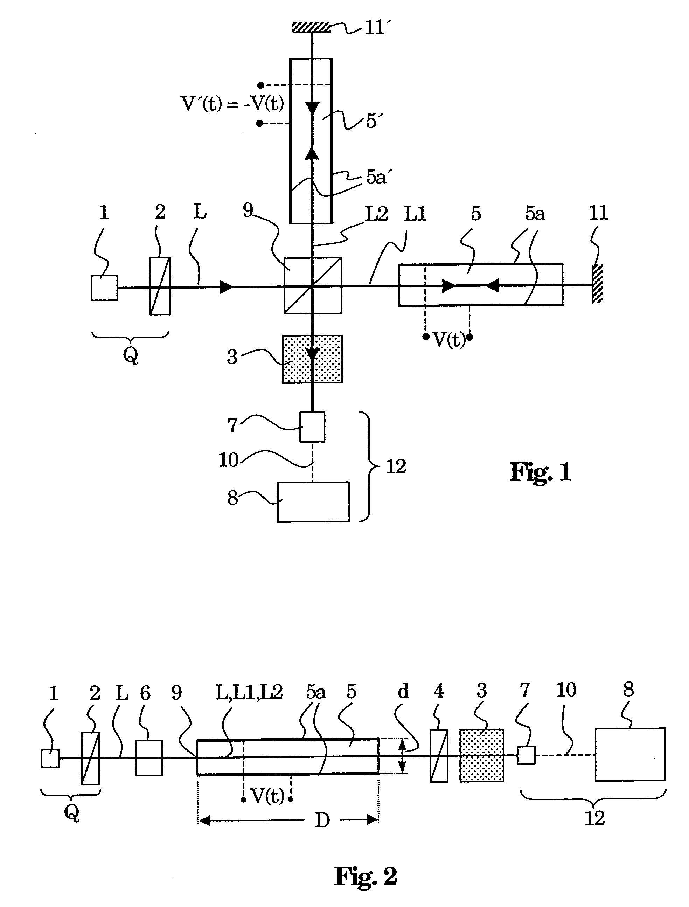

Fig. 1 zeigt ein erfindungsgemässes zweiarmiges Fourier-Transform-Spektrometer (FTS). Als eine Lichtquelle Q, die linear polarisiertes Licht L erzeugt, dient ein Lichterzeuger 1, beispielsweise eine Halogenlampe 1, und ein Polarisator 2. Das Licht L breitet sich entlang eines Lichtweges L aus und wird mittels eines Strahlteilers 9 als Teilstrahlerzeugungsmittel 9 in zwei linear polarisierte Teilstrahlen L1 und L2 zerlegt, die Teil-Lichtwege L1 beziehungsweise L2 des Lichtweges L beschreiben. Beide Teil-Lichtwege L1,L2 sind hier gleichartig aufgebaut. Am Ende der Teil-Lichtwege, entsprechend der optische Mitte der Teil-Lichtwege, ist jeweils ein Spiegel 11,11' angeordnet, welcher den jeweiligen Teilstrahl L1,L2 reflektiert.

Zwischen dem Strahlteiler 9 und dem Spiegel 11,11' ist jeweils ein elektrooptisches Element 5 beziehungsweise 5' angeordnet. Die elektrooptischen Elemente 5,5' weisen jeweils zwei Elektroden 5a beziehungsweise 5a' auf, an welchen elektrische Spannungen V beziehungsweise V' anlegbar sind. Die elektrischen Spannungen V,V' sind zeitlich veränderliche Spannungen V(t),V'(t). Sie werden durch mindestens eine nicht-dargestellte Spannungsquelle erzeugt. Vorteilhafterweise sind die Spannungen V(t),V'(t) entgegengesetzt gleich gross: V'(t) = -V(t), so dass nur eine einzige Spannungsquelle benötigt wird. Die vorteilhaft gleichartigen und gleichartig angeordneten elektrooptischen Elemente 5,5' sind beispielsweise BGO-Kristalle, in denen die Spannungen V,V' jeweils ein elektrisches Feld E, E' erzeugen. Durch den Pockels-Effekt ändert sich der Brechungsindex der Kristalle, so dass zwischen den beiden Teilstrahlen L1,L2 ein Wegunterschied $\Delta$s erzeugbar ist. Selbstverständlich ist ein Wegunterschied auch erzielbar, wenn in nur einem der zwei Teil-Lichtwege ein elektrooptisches Element angeordnet ist.

Auf die verschiedenen möglichen gegenseitigen Orientierungen der elektrischen Felder E,E', der Strahlrichtung und der Kristallachsen wird weiter unten eingegangen.

Nach Reflexion am Spiegel 11,11' werden die Teilstrahlen L1,L2 im Strahlteiler 9 wieder zusammengeführt. Dort werden sie auch zur Interferenz gebracht. Dann durchläuft das Licht eine vorzugsweise gasförmige Probe 3, deren Spektrum zu bestimmen ist. Danach wird das Licht L einer Detektions-Auswerte-Einheit 12 zugeführt. Diese umfasst im wesentlichen einen Detektor 7 und eine Signalverarbeitung 8, welche beide über eine Signalleitung 10 miteinander verbunden sind.

Die Detektions-Auswerte-Einheit 12 dient der Detektion des Lichtes L, der Erzeugung eines Interferogramms I($\Delta$s) durch Messung der Intensität I des Lichtes L (Lichtleistung I) als Funktion eines Wegunterschiedes $\Delta$s zwischen den zwei Teilstrahlen L1,L2 und zur Bestimmung eines Spektrums G mittels einer Fourier-Transformation des Interferogramms I($\Delta$s):

$$G(k) = \int_{-\infty}^{\infty} I(\Delta s) \exp (2\pi \ ik\Delta s) \ d(\Delta s),$$

wobei k = 2/$\lambda$ die Wellenzahl und $\lambda$ die Lichtwellenlänge ist. Das Spektrum G ist die spektrale Verteilung der Lichtleistung I.

Analog zu dem in Fig. 1 dargestellten FTS auf Basis eines Michelson-Interferometers kann ein erfindungsgemässes FTS auch auf Basis eines Mach-Zehnder-Interferometers aufgebaut werden.

Fig. 2 zeigt eine besonders bevorzugte Ausführungsform des erfindungsgemässen FTS. In dem dargestellten, einarmige FTS weist der Lichtweg L keine getrennt verlaufenden Teil-Lichtwege L1,L2 auf. Das von dem Lichterzeuger 1 (beispielsweise schwarzer Strahler) erzeugte Licht L wird mittels des Polarisators 2 in lineares Licht umgewandelt. Nach Durchlaufen eines optionalen Phasenverzögerers 6 wird das Licht L an einer Kopplungsstelle 9 in das elektrooptische Element 5 eingekoppelt, und zwar so, dass die Achse der linearen Polarisation des Lichtes L einen Winkel von vorzugsweise 45° bildet mit den Hauptachsen der Doppelbrechung des elektrooptischen Elementes 5. Dadurch werden zwei linear polarisierte Teilstrahlen L1,L2 erzeugt, welche zueinander orthogonal polarisiert und von gleicher Intensität sind. Diese Teil-Lichtstrahlen L1,L2 beschreiben denselben Lichtweg L.

Das elektrooptische Element 5 ist wieder vorteilhaft ein BGO-Kristall, an dem mittels einander gegenüberliegend angebrachten Elektroden 5a eine veränderbare elektrische Spannung V(t) anlegbar ist. Dadurch entsteht in dem elektrooptischen Kristall 5 ein elektrisches Feld E (nicht dargestellt), welches so ausgerichtet ist, dass es eine Veränderung der Doppelbrechung des Kristalls hervorruft, durch welche ein Wegunterschied $\Delta$s zwischen den Teilstrahlen L1,L2 erzeugt wird. Die von dem Licht L in dem elektrooptischen Element 5 zurückgelegte Strecke ist mit D bezeichnet. Der Elektrodenabstand, entsprechend der Dicke des elektrooptischen Materials zwischen den Elektroden 5a, ist mit d bezeichnet.

Nach Durchlaufen des elektrooptischen Elementes 5 durchläuft das Licht L einen als Analysator wirkenden Polarisator 4, dessen Durchlassrichtung mit den Hauptachsen der Doppelbrechung des elektrooptischen Elementes 5 Winkel von 45° beziehungsweise -45° bildet. Relativ zur Durchlassrichtung des Polarisators 2 ist die Durchlassrichtung des Analysators 4 um 0° oder 90° gedreht.

Dann durchläuft das Licht die Probe 3 und wird, analog zur Fig. 1, der Detektions-Auswerte-Einheit 12 zugeführt.

Der elektrooptisch induzierte Wegunterschied $\Delta$s ist von der Lichtwellenlänge $\lambda$ abhängig und beträgt

$$\Delta s(\lambda) = n_0^{3}(\lambda)\, r(\lambda)\, E\, D,$$

wobei no der Brechungsindex für verschwindendes elektrisches Feld (E = 0) ist, r das massgebliche Tensorelement des elektrooptischen Tensors des elektrooptischen Materials, E die Feldstärke im elektrooptischen Material und D die von dem Licht in dem elektrooptischen Material zurückgelegte Strecke ist. Für die Feldstärke E gilt E = V/d, wobei d der Elektrodenabstand ist.

Die Auflösung kann auf einfache Weise um einen Faktor 2 verbessert werden, indem die Spannung mit wechselnder Polarität an den Kristall angelegt wird, das heisst die Spannung wird nicht zwischen 0 V und einer Maximalspannung $V_{max}$, sondern zwischen $-V_{max}$ und $+V_{max}$ variiert. In diesem Fall ist es erforderlich, mit einem zusätzlichen doppelbrechenden Kristall, nämlich dem als Kompensator 6 wirkenden Phasenverzögerer 6, einen konstanten Wegunterschied einzuführen, welcher dem bei $V_{max}$ vorliegenden Wegunterschied $\Delta s_{max}$ entspricht. Der totale Wegunterschied (durch die natürliche Doppelbrechung des Phasenverzögerers 6 und durch die feldinduzierte Doppelbrechung in dem elektrooptischen Element 5) variiert dann zwischen 0 und $2\Delta s_{max}$.

Wenn eine feldunabhängige, natürliche Doppelbrechung $\Delta n(\lambda)$ vorliegt, ergibt sich der Wegunterschied wie folgt:

$$\Delta s(\lambda) = n_0^{3}(\lambda)\, r(\lambda)\, E\, D + \Delta n(\lambda)\, D\,,$$

wobei der Effekt der feldunabhängigen Doppelbrechung in analoger Weise mittels eines Kompensators 6 kompensierbar ist.

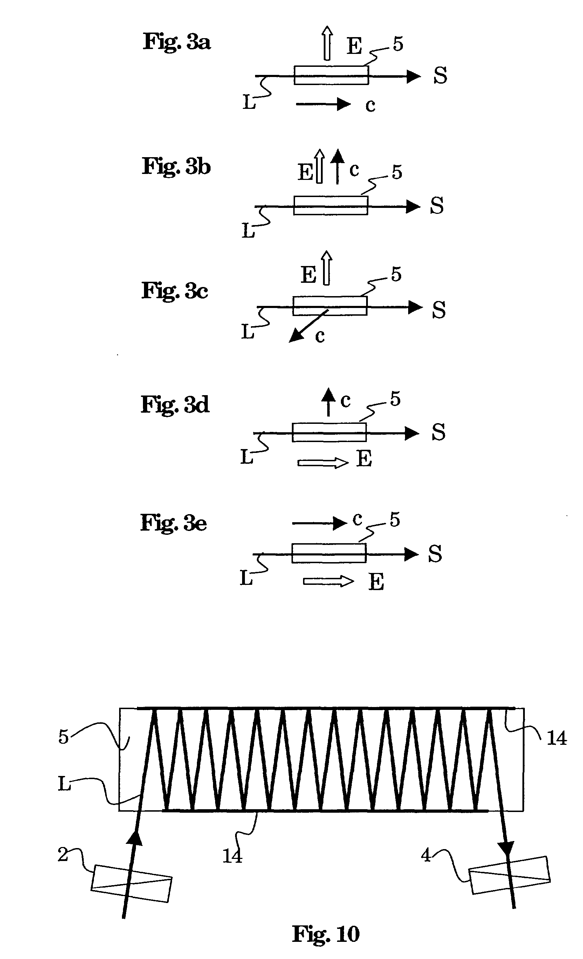

Die Figs. 3a bis 3e veranschaulichen verschiedene Möglichkeiten der relativen Orientierungen von Strahlrichtung S, der Richtung des elektrischen Feldes E und der optischen Achse c für optische einachsige Kristalle. Licht, das sich entlang dieser optischen Achse c ausbreitet, sieht unabhängig von seiner linearen Polarisation denselben, sogenannten "ordentlichen" Brechungsindex $n_0$. Die Konfigurationen, bei denen das Feld E senkrecht zur Strahlrichtung S steht (Figs. 3a, 3b, 3c), haben für Kristalle mit d < D den Vorteil, dass bei einer gegebenen Maximalspannung $V_{max}$ der maximal erreichbare Wegunterschied $\Delta s_{max}$ grösser ist als bei paralleler Feldrichtung. Zudem sind im Unterschied zu dem Fall, dass Feld E und Strahlrichtung S parallel zueiander sind, keine optisch transparente Elektroden (beispielsweise aus Indium-Zinn-Oxid) notwendig.

Je nach Kristallklasse tritt jedoch nicht in jeder der in den Figs. 3a-3e dargestellten Konfiguration eine feldinduzierte Doppelbrechung auf.

Bei der Auswahl geeigneter Kristalle sind unter anderem folgende Kriterien zu beachten:

- grosser elektro-optischer Effekt vorteilhaft, das heisst, das Produkt $n_0^{3}(\lambda)\, r(\lambda)$ ist gross
- Transparenz im relevanten Spektralbereich (typischerweise nahes und/oder mittleres Infrarot)
- geringe Temperaturabhängigkeit des elektro-optischen Effekts vorteilhaft
- hohe Langzeitstabilität
- Kristalle in ausreichender Grösse herstellbar
- geringer Effekt von induzierter und gegebenenfalls natürlicher Doppelbrechung auf Interferogramm bei divergentem Lichtstrahl

    Bei der Ausführung des FTS (Kristallorientierung, Orientierung der Polarisatoren, Richtung des elektrischen Feldes, Strahlrichtung) ist die Kristallsymmetrie zu berücksichtigen. Die Grundlagen dazu sind in der einschlägigen Fachliteratur der Kristalloptik beschrieben. Im folgenden sind einige bevorzugte Ausführungen beschrieben.

l. Kristalle kubischer Symmetrie, Beispiel $Bi_4Ge_3O_{12}$ (BGO):

BGO ist ein kubischer Kristall der Punktsymmetriegruppe $\underline{4}$3m und weist keine natürliche (feldunabhängige) Doppelbrechung auf. BGO ist im Spektralbereich zwischen 0.35$\mu$m und 4 $\mu$m transparent. Die Temperaturabhängigkeit des elektrooptischen Effektes ist gering. Die Dispersion ist für Wellenlängen über etwa 600 nm klein. Das Material hat eine gute Langzeitstabilität. Kristalllängen (einkristallin) von über 20 cm sind möglich.

Im folgenden seien die x, y, und z-Richtungen (Hauptrichtungen des Kristalls) bezeichnet als [1,0,0], [0,1,0] und [0,0,1] und die dazu senkrechten Ebenen als (1,0,0), (0,1,0) bzw. (0,0,1). Die Scharen der genannten Richtungen und Ebenen werden mit den Notationen <1,0,0> bzw. {1,0,0} beschrieben.

I.1. Feld senkrecht zur Strahlrichtung

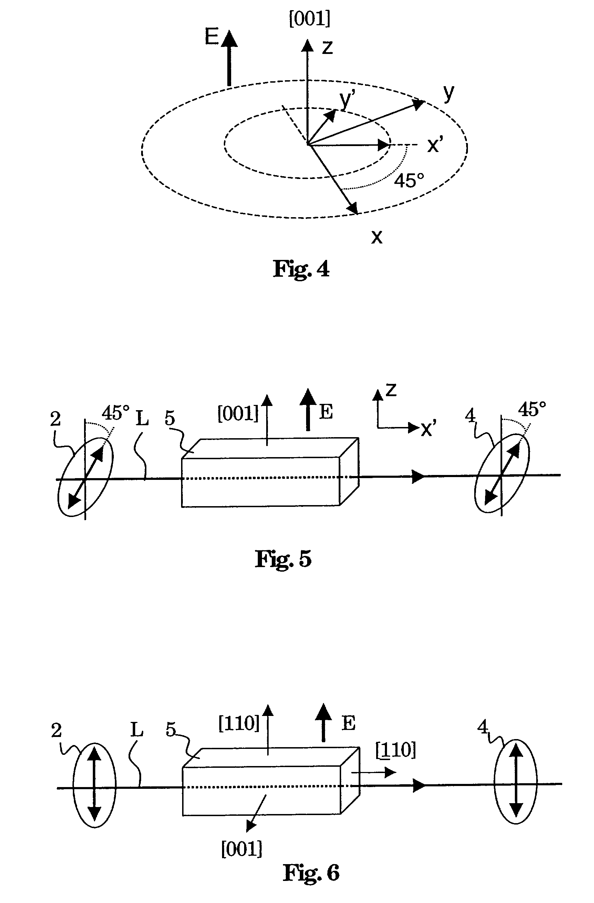

a) Elektrisches Feld E parallel zur z-Richtung, das Feld E steht senkrecht zur kristallographischen (001)-Ebene (allgemein: E steht senkrecht auf einer Ebene aus der Schar der {100-Ebenen}).
  Die Hauptachsen der induzierten Doppelbrechung, x' und y' liegen in der (001)-Ebene und sind bezüglich der x und y-Achsen um 45° gedreht; x' und y', sind also parallel zu [1,1,0] und [-1,1,0].
  Dies ist in Fig. 4 und in Fig. 5 veranschaulicht.
  Der Strahl läuft vorzugsweise parallel zu x' oder y'. Die Polarisatoren 2,4 (also ihre Durchlassrichtungen) stehen unter 45° zur z-Richtung beziehungsweise zur Richtung des elektrischen Feldes E. Das Indexellipsoid im elektrischen Feld E ist gegeben durch

$$n_x' = n_0 + (1/2) \, n_0^3 \, r_{41} \, E$$

$$n_y' = n_0 - (1/2) \, n_0^3 \, r_{41} \, E$$

$$n_z' = n_0$$

wobei $n_0$ der Brechungsindex für E = 0 und $r_{41}$ das massgebliche Element des elektrooptischen Tensors des Kristalls ist. Der Wegunterschied $\Delta s$ zwischen den beiden Polarisationskomponenten ist dann gegeben durch

$$\Delta s = (1/2) \, n_0^3 \, r_{41} \, E \, D$$

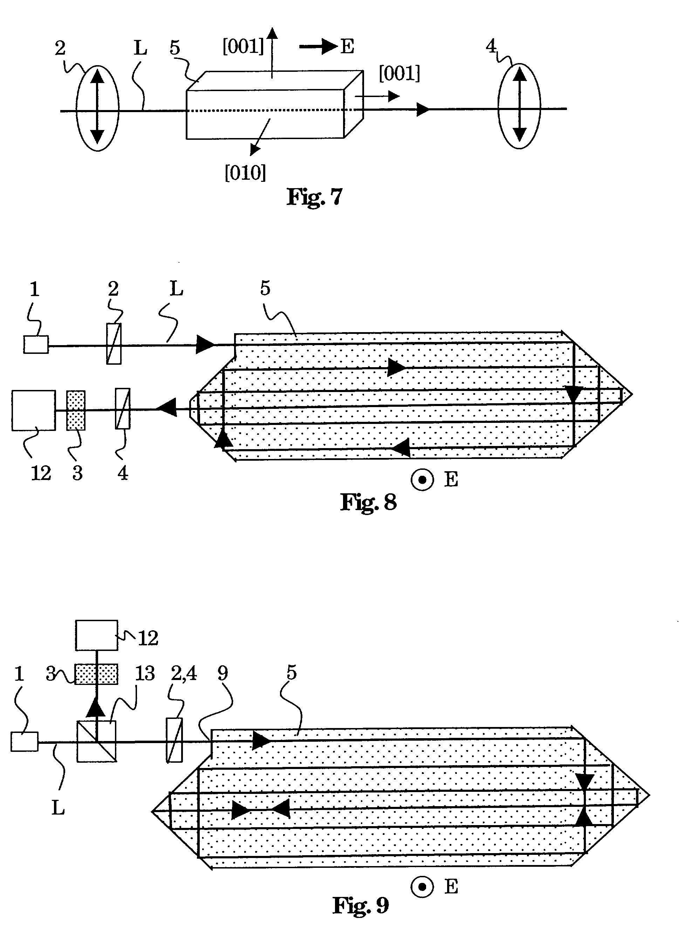

b) Das elektrische Feld steht senkrecht zur kristallographischen (110)-Ebene: Dieser Fall ist in Fig. 6 dargestellt. Das Indexellipsoid ist im elektrischen Feld E wieder gegeben durch

$$n_x' = n_0 + (1/2) \, n_0^3 \, r_{41} \, E$$

$$n_y' = n_0 - (1/2) \, n_0^3 \, r_{41} \, E$$

$$n_z' = n_0,$$

wobei jetzt aber die Achse x' der [1,1,-1] und y' der [1,1,1]- Richtung entspricht. z' entspricht der [1,-1,0]-Richtung. Der Strahl läuft parallel zu z' (senkrecht zu einer (110)-Ebene. Die Durchlassrichtungen der Polarisatoren 2,4 stehen parallel oder senkrecht zur Feldrichtung. Diese Anordnung ergibt für ein gegebenes Feld E und eine gegebene Strecke D für einen Kristall kubischer Symmetrie den grösstmöglichen Wegunterschied $\Delta s$:

$$\Delta s = n_0^3 \, r_{41} \, E \, D$$

und folglich die grösste spektrale Auflösung.
  Ein Zahlenbeispiel für BGO in dieser Konfiguration: $n_0$ = 2.06, $r_{41}$ = 1.11×10$^{-12}$ m/V (für λ = 1000 nm), D = 10 cm, d = 5 mm, maximale Spannung $V_{max}$ = 10 kV. Daraus folgt ein maximaler Wegunterschied von $\Delta s_{max}$ = 1.94 µm. Die resultierende Auflösung beträgt 5150 cm$^{-1}$ bzw. 515 nm, für λ = 1000 nm.

c) Elektrisches Feld E steht senkrecht zur kristallographischen (111)-Ebene: Das Indexellipsoid ist im elektrischen Feld E gegeben durch

$$n_x' = n_0 + [1/(2\sqrt{3})]\, n_0^3\, r_{41}\, E$$

$$n_y' = n_0 + [1/(2\sqrt{3})]\, n_0^3\, r_{41}\, E$$

$$n_z' = n_0 - (1/\sqrt{3})\, n_0^3\, r_{41}\, E$$

Die Achsen x', y' und z' sind parallel zu [1, -1,1], [1,1,-1] und [1,1,1]. Die Strahlrichtung ist parallel zu x' oder y'. Die Polarisatoren stehen unter 45° zur Feldrichtung. Der Wegunterschied beträgt

$$\Delta s = (\sqrt{3}/2)\, n_0^3\, r_{41}\, E\, D$$

<u>I.2. Feld E parallel zur Strahlrichtung:</u>

Folgende Anordnung ist möglich: Elektrisches Feld E und Strahlrichtung S parallel zu einer der <1,0,0>-Richtungen. Die Polarisatoren 2,3 sind parallel zu einer dazu orthogonalen <1,0,0>-Richtung ausgerichtet. Der Wegunterschied $\Delta s$ beträgt

$$\Delta s = n_0^3\, r_{41}\, V$$

Dieser Fall ist in Fig. 7 illustriert.

<u>II. Andere elektro-optische Materialen mit kubischer Symmetrie:</u>

Ausser BGO gibt es zahlreiche weitere elektrooptische Materialen mit kubischer Symmetrie. Dazu gehören viele Halbleiter, wie beispielsweise CdTe, GaAs, GaP, ZnSe, ZnTe, oder auch $Bi_{12}GeO_{20}$ und $Bi_{12}SiO_{20}$ (BSO). Ein Vorteil kubischer Materialen besteht darin, dass sie keine natürliche, also feldunabhänige Doppelbrechung aufweisen. Natürliche Doppelbrechung vermindert bei divergenten Strahlen den Interferenzkontrast. Oder anders ausgedrückt, bei natürlich doppelbrechenden Materialien muss die Strahldivergenz ausreichend klein gehalten werden, um ein Verschmieren des Interferogramms zu vermeiden.

<u>III. Kristalle der Kristallklasse 3m, Beispiel Lithiumniobat (LiNbO$_3$):</u>

$LiNbO_3$ ist ein trigonaler Kristall der Punktsymmetriegruppe <u>3</u>m und ist natürlich doppelbrechend. Das Material ist für Modulatoranwendungen weit verbreitet. Die Brechungsindizes ohne Feld sind gegeben durch $n_x = n_0$, $n_y = n_0$, $n_z = n_e$, wobei $n_0$ der ordentliche Index und $n_e$ der ausserordentliche Index ist.

<u>III.1. Feld senkrecht zur Strahlrichtung:</u>

a) Feld E parallel zur z-Achse (c-Achse), Lichtausbreitungsrichtung S entlang einer beliebigen Richtung in der x, y-Ebene, siehe Fig. 3b. Das Indexellipsoid ist gegeben durch

$$n_x = n_0 - (1/2)\, n_0^3\, r_{13}\, E$$

$$n_y = n_0 - (1/2)\, n_0^3\, r_{13}\, E$$

$$n_z = n_e - (1/2)\, n_e^3\, r_{33}\, E$$

Die Richtungen der Hauptachsen x', y' bleiben im Vergleich zum feldfreien Fall E = 0 unverändert.

Das Licht läuft entlang einer beliebigen Richtung in der x, y-Ebene, beispielsweise parallel zu x oder y. Die Polarisatoren 2,4 stehen unter 45° zur Feldrichtung. Der Wegunterschied $\Delta s$ ist gegeben durch

$$\Delta s = [(n_e - n_0) - (1/2)(n_e^3 r_{33} - n_0^3 r_{13}) E] D$$

$$= [(n_e - n_0) - (1/2) n_e^3 (r_{33} - (n_0^3 / n_e^3) r_{13}) E] D$$

$$= [(n_e - n_0) - (1/2) n_e^3 r_c E] D,$$

wobei $r_{13}$, $r_{13}$ und $r_c$ die relevanten Tensor-Elemente sind. Aufgrund der natürlichen Doppelbrechung enthält der Wegunterschied $\Delta s$ einen feldunabhängigen Term.

Ein Zahlenbeispiel in dieser Konfiguration: $n_0 = 2.286$, $n_e = 2.20$, $r_c = 17.7 \times 10^{-12}$ m/V (für $\lambda = 514$ nm ), D = 10 cm, d = 5 mm, maximale Spannung $V_{max} = 10$ kV. Daraus folgt ein maximaler feld-induzierter Wegunterschied $\Delta s_{max} = 18.8$ μm. Die resultierende Auflösung beträgt 532 cm$^{-1}$ oder 53 nm für $\lambda = 1000$ nm und ist damit etwa eine Grössenordnung besser als diejenige, die man mit BGO unter vergleichbaren Bedingungen erzielt.

b) Feld E senkrecht zur z-Achse (c-Achse) und parallel zu x, Lichtausbreitungsrichtung S entlang der c-Achse (siehe Fig. 3a):

Die Richtungen der Hauptachsen x', y' der induzierten Doppelbrechung sind um 45° bezüglich der Feldrichtung gedreht. Die Polarisatoren 2,4 stehen parallel oder senkrecht zur Feldrichtung. Der Wegunterschied $\Delta s$ ist gegeben durch

$$\Delta s = n_o^3 r_{22} E D .$$

c) Feld E senkrecht zur z-Achse (c-Achse) und parallel zu y, Lichtausbreitungsrichtung S entlang der c-Achse (ebenfalls Fig. 3a):

Die Richtungen der Hauptachsen x', y' der induzierten Doppelbrechung sind parallel respektive senkrecht zur Feldrichtung. Die Polarisatoren stehen unter 45° zur Feldrichtung. Der Wegunterschied $\Delta s$ ist ebenfalls gegeben durch

$$\Delta s = n_o^3 r_{22} E D .$$

d) Feld E senkrecht zur z-Achse (c-Achse), beliebige Richtung in der x-y-Ebene, Lichtausbreitungsrichtung S entlang der c-Achse (ebenfalls Fig. 3a):

Die Richtungen der Hauptachsen x', y' der induzierten Doppelbrechung sind um -φ/2 gedreht, falls die Feldrichtung mit der x-Achse einen Winkel φ bildet. Die Polarisatoren 2,4 bilden mit x' (oder y') einen Winkel von -φ/2 +45° oder -φ/2 - 45°. Der Wegunterschied $\Delta s$ ist ebenfalls gegeben durch

$$\Delta s = n_o^3 r_{22} E D .$$

IV. Kristallklasse 42m, Beispiel Kaliumdihydroaenphosphat (KDP):

KDP ist eines der bekanntesten elektrooptischen Materialien. Es gehört zur Punktgruppe 42m, hat also eine 4-zählige Symmetieachse (c-Achse, z) und zwei zueinander senkrechte, 2-zählige Symmetieachsen (x, y) in der Ebene senkrecht zu z. Die einzigen, nichtverschwindenden Elemente des elektrooptischen Tensors sind $r_{41} = r_{52}$ und $r_{63}$.

Für ein Feld E entlang der c-Achse ist das Indexellipsoid ist gegeben durch

$$n_{x'} = n_0 - (1/2) n_0^3 r_{63} E$$

$$n_{y'} = n_0 + (1/2) n_0^3 r_{63} E$$

$$n_z = n_e,$$

wobei die Hauptachsen x', y' bezüglich x, y um 45° gedreht sind.

Für Felder E entlang x oder y treten nur Brechungsindexänderungen zweiter Ordnung auf, die für Anwendungen in einem FTS eher nicht von Interesse sind. Damit ergeben sich folgende mögliche Anordnungen:

a) Feld E parallel zur c-Achse, Feld und c-Achse senkrecht zur Strahlrichtung, Strahlrichtung parallel zu x' oder y' (siehe Fig. 3b).

Die Polarisatoren 2,4 stehen unter 45° zur Feldrichtung. Der Wegunterschied $\Delta s$ ist gegeben durch

$$\Delta s = [(n_e - n_o) - (1/2)\, n_o{}^3\, r_{63}\, E]\, D \qquad \text{für } S \parallel x' \text{ und}$$

$$\Delta s = [(n_e - n_o) + (1/2)\, n_o{}^3\, r_{63}\, E]\, D \qquad \text{für } S \parallel y'.$$

Ein Zahlenbeispiel in dieser Konfiguration: $n_0 = 1.51$, $n_e = 1.47$, $r_{63} = -10.5 \times 10^{-12}$ m/V, D = 10 cm, d = 5 mm, maximale Spannung $V_{max} = 10$ kV.

Daraus ergibt sich ein maximaler feldabhängiger Wegunterschied $\Delta s_{max} = 3.6$ µm bei $S \parallel x'$. Die resultierende Auflösung beträgt 2780 cm$^{-1}$ bzw. 278 nm, für $\lambda = 1000$ nm. Aufgrund der feldunabhängigen Doppelbrechung addiert sich zum feldabhängigen Wegunterschied $\Delta s$ ein konstanter Term von 4 mm, der kompensiert werden muss, beispielsweise mittels eines Kompensators 6 (siehe beispielsweise Fig. 2).

b) Feld E und c-Achse parallel zur Strahlrichtung S (siehe Fig. 3e). Die Polarisatoren 2,4 stehen parallel oder senkrecht zur x-Achse. Der Wegunterschied $\Delta s$ ist gegeben durch

$$\Delta s = n_o{}^3\, r_{63}\, E\, D.$$

Weitere geeignete elektrooptische Materialien der Klasse $\underline{4}$2m sind beispielsweise $KD_2PO_4$ (DKDP), $KH_2AsO_4$ (KDA), $RbH_2AsO_4$ (RDA) und $NH_4H_2PO_4$ (ADP).

V. Kristallklasse 4mm, Beispiel $BaTiO_3$:

Elektrisch gepoltes $BaTiO_3$ ist zwischen ca 9°C und 127°C ferroelektrisch mit Symmetrie 4mm. Ein besonderer Vorteil ist der vergleichsweise grosse elektrooptische Effekt des Kristalls. Strahl-, Feld- und Kristallorientierung werden vorteilhaft gemäss Fig. 3b gewählt und die Polarisatoren 2,4 unter 45° zur c-Achse. Der elektrooptisch induzierte Wegunterschied $\Delta s$ ist dann gegeben als

$$\Delta s = [(n_e - n_0) - (1/2)\,(n_e{}^3\, r_{33} - n_0{}^3\, r_{13})\, E]\, D$$
$$= [(n_e - n_0) - (1/2)\, n_e{}^3\, r_c\, E]\, D$$

Ein Zahlenbeispiel: Mit $r_c = 79 \times 10^{-12}$ m/V, $n_0 = 2.494$, $n_e = 2.431$ (bei 514 nm), D = 10 cm, d = 5 mm und einer maximalen Spannung $V_{max} = 10$ kV ergibt sich ein maximaler, feld-induzierter Wegunterschied $\Delta s_{max}$ von $\Delta s_{max} = 113$ µm. Die resultierende Auflösung beträgt 88.5 cm$^{-1}$ bzw. 8.9 nm, für $\lambda = 1000$ nm.

Da $BaTiO_3$-Kristalle von guter optischer Qualität in der Regel relativ klein sind, müssen im allgemeinen mehrere $BaTiO_3$-Kristalle hintereinander im Lichtweg L angeordnet werden, um eine ausreichende Gesamtlänge wie die angenommene Gesamtlänge von 10 cm zu erhalten.

Grosse Werte der elektrooptischen Koeffizienten wurden auch in verwandten Materialien wie Strontium-Barium-Niobat ($Sr_xBa_{1-x}Nb_2O_6$) gemessen.

Die oben angegebenen Konfigurationen sind lediglich als Beispiele für einige bevorzugte Anordnungen verstehen. Andere Anordnungen sind möglich. Von besonderem Interesse sind grundsätzlich solche Kristalle, bei denen die Richtung der feld-induzierten Achsen x', y' unabhängig von der Feldstärke E ist. Dies gilt für Kristalle der Kristallklassen, 4, 422, 4mm, $\underline{4}$2m, $\underline{4}$, 6, $\underline{6}$22, 6mm, 23 und $\underline{4}$3m. Im Unterschied dazu weisen die Klassen 32, 3m, $\underline{6}$m2, 3

und 6 eine von der Feldstärke abhängige Richtung der Hauptachsen auf und sind deshalb weniger vorteilhaft.

Besonders vorteilhaft sind weiterhin Anordnungen, die eine kleine Empfindlichkeit auf Fehlwinkel der Strahlrichtung und auf die Divergenz des Lichtstrahls haben. Dadurch ist das FTS ist weniger kritisch bezüglich Justierfehlern und Kollimation des Lichtstrahls im Kristall.

In Fig. 8 ist eine vorteilhafte Ausführungsform dargestellt, in welcher eine verbesserte Auflösung durch eine Verlängerung der Strecke D erreicht wird. Der Lichterzeuger 1 erzeugt ployochromatisches Licht L, das in dem Polarisator 2 linear polarisiert wird. Dann wird das Licht L in das elektrooptische Element 5 geführt. Vorteilhaft ist das elektrooptische Element 5 im wesentlichen ein elektrooptischer Kristall 5. Dieser Kristall 5 ist in Fig. 8 so geschliffen, dass der Lichtstrahl durch Totalreflexion innerhalb des Kristalls 5 reflektiert wird. Die Strecke D, die von dem Licht L innerhalb des Kristalls zurückgelegt wird, beträgt darum ein Vielfaches der Länge des Kristalls 5. Das elektrische Feld E steht in Fig. 8 senkrecht zur Papierebene.

Anstatt einen Kristall 5 mit einer zu Totalreflexion führenden Form zu wählen, kann auch der Kristall 5 an geeigneten Stellen verspiegelt werden oder zwischen Spiegeln angordnet werden (nicht dargestellt).

Bei einer Konfiguration mit solchen Reflexionen innerhalb des Kristalls 5 ist zu beachten, dass, abhängig von der Kristallsymmetrie, der elektrooptische Effekt von der Richtung des Lichtstrahls innerhalb des Kristalls 5 abhängen kann; dass sich also auf den "Querstrecken" des Lichtstrahls andere Wegunterschiede pro zurückgelegter Strecke aufaddieren als auf den "Längsstrecken". Das gleiche gilt auch für eventuell vorhandene natürliche, feldunabhänige Doppelbrechung.

Besonders einfach ist die Situation bei kubischen Kristallen, wie beispielsweise BGO. Für eine Konfiguration gemäss Figs. 4 und 5 hat der elektrooptische Effekt auf den Querstrecken (senkrecht zur Strahlrichtung ausserhalb des Kristalls 5) das entgegengesetzte Vorzeichen des Effekts auf den Längsstrecken (parallel zu der Strahlrichtung ausserhalb des Kristalls 5). Die Querstrecken heben also einen Teil des auf den Längsstrecken erzeugten Wegunterschiedes auf. Im Unterschied dazu tragen bei der Konfiguration gemäss Fig. 6 Längs- und Querstrecken mit gleichem Vorzeichen (und gleicher Wichtung) zum Wegunterschied bei.

Fig. 9 zeigt eine ähnliche Konfiguration wie Fig. 8. Die Einstrahlrichtung des Lichtes L in den Kristall ist so gewählt, und der Kristall 5 ist so geschliffen oder verspiegelt, dass der Lichtstrahl L im Kristall 5 mehrfach reflektiert und schliesslich in sich selbst reflektiert wird. Der von dem Licht L in dem Kristall 5 zurückgelegte geometrische Weg wird also von dem Licht zweimal, erst in einer und dann der entgegengesetzten Richtung, durchlaufen. Entsprechend verlässt der Lichtstrahl L den Kristall 5 an der gleichen Stelle, an der er in den Kristall eingetreten ist. Darum ist ein Strahlteiler 13 im Lichtweg L angeordnet, mittels dessen der Lichstrahl L in die Probe 3 geführt wird. Der zwischen dem elektrooptischen Element 5 und dem Strahlteiler 13 angeordnete Polarisator 2 wirkt gleichzeitig als Analysator 4.

Zahlenbeispiele: BGO-Kristall in einer Konfiguration gemäss Figs. 6 und 9 mit insgesamt 12-maligem Lichtdurchlauf, mittlere Länge der Längswege 10 cm, d = 5 mm, maximale Spannung $V_{max}$ = ±10 kV (positive und negative Polarität und entsprechender Kompensator 6, nicht dargestellt). Es ergibt sich ein maximaler Wegunterschied von $\Delta s_{max}$ = 46.6 µm (Beitrag der Querwege vernachlässigt). Die resultierende Auflösung beträgt 215 cm$^{-1}$ bzw. 21.5 nm, für λ = 1000 nm.

Für die anderen weiter oben diskutierten Materialien ergeben sich für λ = 1000 nm die folgenden Auflösungen: LiNbO$_3$: 2.2 nm, KDP: 11.6 nm, BaTiO$_3$: 0.36 nm (jeweils Orientierung gemäss Fig. 3b).

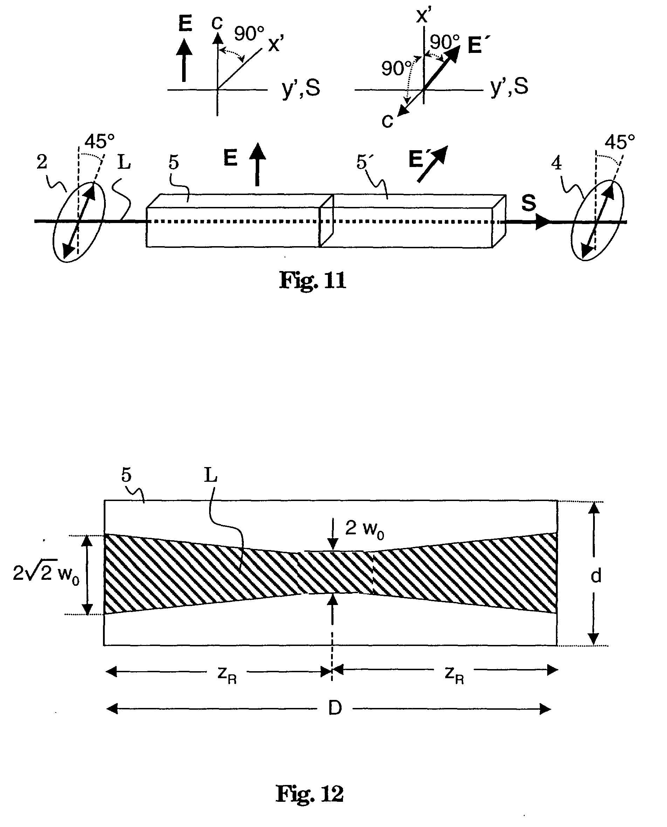

In Fig. 10 ist ein weiteres Beispiel dargestellt, wie mittels mehrfacher Reflexion im Kristall 5 eine verbesserte Auflösung erzielt werden kann. Der Kristall 5 ist an zwei im wesentlichen parallel zueinander ausgerichteten Flächen mit jeweils einer Verspiegelung 14 versehen. Das unter einem kleinen nicht-verschwindenden Winkel zu diesen Flächen eingestrahlte Licht L erfährt vielfache Reflexionen, bevor es aus dem Kristall 5 wieder austritt. Dadurch werden sehr grosse Strecken D und sehr hohe Auflösungen realisiert. Die zulässigen Feldrichtungen und die geeigneten Orientierungen der Kristallachsen sind abhängig von der Kristallsymmetrie. Ausserdem muss für die jede Anordnung der Einfluss des Winkels zwischen der Strahlrichtung und den Kristallachsen beachtet werden.

Auch in Ausführungsformen gemäss Fig. 10 kann bei einer geeigneten Wahl des Einfallswinkels auf eine Verspiegelung 14 verzichtet werden, indem die Totalreflexion ausgenutzt wird.

Fig. 11 zeigt schematisch eine Konfiguration zur Kompensation von Veränderungen des Lichts aufgrund natürlicher, feldunabhängiger Doppelbrechung durch die Verwendung zweier elektrooptischer Elemente 5,5'. Sofern das mindestens eine doppelbrechende Element 5 eine feldunabhängige Doppelbrechung aufweist, wird der Effekt dieser feldunabhängigen Doppelbrechung vorteilhaft kompensiert. Der Wegunterschied aufgrund der natürlichen Doppelbrechung kann wesentlich grösser als der feld-induzierte Wegunterschied sein. Die Kompensation des Einflusses der feldunabhängigen Doppelbrechung kann, wie beispielsweise in Fig. 2 dargestellt, durch ein zusätzliches, doppelbrechendes Material geschehen, das im Strahlengang plaziert wird (Kompensator 6).

Eine alternative und besonders elegante Methode ist in Fig. 11 dargestellt. Zwei elektrooptische Kristalle 5,5' mit vorteilhaft gleichen optischen und elektrooptischen Eigenschaften sind im Lichtweg L hintereinander angeordnet. Vorzugsweise werden zwei Kristalle 5,5' aus demselben Material mit denselben Abmessungen verwendet. Als Beispiel ist in Fig. 11 der Fall zweier Kristalle 5,5' der Klasse 4̱2m dargestellt, entsprechend dem Fall a oben beschriebenen im Abschnitt IV.

Die für den elektrooptischen Effekt massgeblichen Achsen x' und c des zweiten Kristalls 5'sind bezüglich der Achsen x' und c des ersten Kristalls 5 um +90° um die Strahlrichtung gedreht (siehe die kleinen Teilfiguren über den Kristallen 5,5' in Fig. 11). Die Polarisationsrichtung des Lichts steht unter +45° (oder -45°) zu c. Das elektrische Feld E' am zweiten Kristall 5' ist gegenüber dem Feld E am ersten Kristall um -90° um die Strahlrichtung gedreht ausgerichtet. Die Drehungen können selbstverständlich auch -90° für die Achsen x',y' und +90° für die Felder betragen. Auf diese Weise wird die natürliche Doppelbrechung der beiden Kristalle 5,5' kompensiert und der feld-induzierte Wegunterschied gegenüber der Verwendung nur eines der Kristalle 5,5' verdoppelt. In analoger Weise können auch die Effekte natürlicher Doppelbrechung bei Kristallen anderer Geometrie durch die Hintereinanderanordnung zweier oder mehrerer geeigneter und geeignet angeordneter Kristalle kompensiert werden.

In dem man die beiden Kristalle unterschiedlich lang macht, ist es möglich, gezielt einen im feldfreien Fall von Null verschiedenen Wegunterschied einführen. Dadurch kann ein zusätzlicher Kompensator entfallen.

In den oben beschriebenen Ausführungsformen ist der Lichtstrahl lediglich durch einen Zentralstrahl angedeutet. Grundsätzlich gibt es mehrere Möglichkeiten, den Strahl L durch das FTS zu führen. Das Licht der Quelle kann beispielsweise durch eine Linse kollimiert und als ein Parallelstrahlenbündel durch das FTS geschickt werden.

Um die Kristalldicke d klein zu halten, eine hohe Lichtleistung durch den Kristall 5 und die Probe 3 zu schicken, und auch um Beugungseffekte klein zu halten, ist es von Vorteil den Lichtstrahl L am Ort des Kristalls 5 und/oder der Probe 3 zu fokussieren (nicht dargestellt). Bei einer gegebenen Kristall-Länge D (oder, im Falle mehrfachen Durchlaufens des Kristalls, Länge D des Lichtweges L im Kristall) kann die Kristalldicke d (oder Kristall-Durchmesser) auf ein Minimum reduziert werden, wenn die (nicht dargestellte) das Licht L fokussierende Optik so dimensioniert wird, dass die Länge D des Lichtweges L im Kristall 5), der zweifachen Rayleigh-Länge, $2z_R$ (Nahfeldbereich) entspricht; dabei werden Gauss'sche Strahlen angenommen. Die Rayleigh-Länge ist gegeben durch $z_R = \pi n_0 w_0^2 / \lambda$.

In Fig. 12 ist eine solche Strahlgeometrie veranschaulicht. Der Strahldurchmesser an der Aus- und an der Eintrittsfläche des Kristalls 5 beträgt dann $2\sqrt{2}\, w_0$, wobei $2w_0$ der Durchmesser der Strahltaille ist. (In einem Abstand $r = w_0$ von der Strahlachse ist die Amplitude des optischen Feldes auf $1/e$ und die Lichtintensität auf $(1/e)^2$ abgefallen.) Um Beugungseffekte gering und die Strahljustierung einfach zu gestalten, sollte die Kristalldicke mindestens $d = 1.5\pi\sqrt{2}\, w_0$ betragen.

Beträgt im Falle eines im wesentlichen zylindischen Kristalls 5 der Kristalldurchmesser beispielsweise 5 mm, so beträgt der optimale Durchmesser $2w_0$ der Strahltaille etwa 1.5 mm. Für $n_0 = 2$ und $\lambda = 1$ μm beträgt $z_R$ etwa 3.5 m. Der Lichtweg im Kristall könnte damit bis zu 7 m lang sein. Um einen Taillendurchmesser $d_0 = 2w_0$ zu erreichen, müssen Durchmesser $D_L$ und Brennweite $f_L$ der fokussierenden Linse gemäss $d_0 \approx 2f_L \lambda / D_L$ dimensioniert werden. Hierbei ist angenommen, dass der Strahldurchmesser 2w an der Linse gegeben ist durch $2w = 2D_L / \pi$ (in dem Fall passieren 99 % der Lichtleistung die Linse). Für $f_L = 5$m und $\lambda = 1$ μm ergibt sich $D_L = 6.7$ mm.

Zur Wellenlängeneichung des FTS kann Licht mit mindestens einer bekannten Wellenlänge (beispielsweise Licht einer Neon-Spektrallampe) durch das FTS geschickt werden. Proben- und Eichmessungen können gleichzeitig oder nacheinander vorgenommen werden.

Um die elektrische Durchschlagsfestigkeit im Bereich der Elektroden 5a zu erhöhen, kann mindestens das elektrooptische Element 5 vorteilhaft mit einer Verpackung versehen werden. Beispielsweise können als durchschlagsfestigkeitserhöhende Mittel trockene Luft, $SF_6$-Gas, Silikonöl oder Silikon-Gel genommen werden. Insbesondere kann das elektrooptische Element 5 eingegossen werden, beispielsweise in ein Silikon-Gel.

Erfindungsgemässe FTS können vorteilhaft eingesetzt werden in der chemischen Prozesstechnik und in der petrochemischen Industrie, in der Nahrungsmittelindustrie, oder zur Messung von Spurengasen, bei Untersuchungen der Atmosphäre, in der Astrophysik und in anderen wissenschaftlichen Anwendungen.

Anwendungen im nahen (statt mittleren) Infrarot sind in manchen Fällen, beispielsweise bei festen Proben, vorteilhaft. Ein Vorteil dieses Spektralbereichs ist, dass dort eine typischerweise relativ geringere Absorption der zu untersuchenden Proben 3 vorliegt. Die optische Weglänge des durch die Probe 3 verlaufenden Lichtweges kann typischerweise zwischen 0.5 mm und 50 mm betragen, während sie im mittleren Infrarot wegen der im allgemeinen höheren Absorption teilweise nur typischerweise 5 μm bis 50 μm betragen darf, um noch geeignete Signale zu erhalten. Durch die längeren möglichen Weglängen in der Probe 3 ist die Präparation der Probe 3 weniger aufwendig, und die Messungen sind weniger anfällig auf Verunreinigungen der Oberfläche des Probenbehälters. Die Absorptionsbanden im nahen Infrarot entsprechen verschiedenen Obertönen (1. - 3. Oberton) der Banden im mittleren Infrarot. Der Wellenlängenbereich dieser Oberton-Absorption liegt zwischen etwa 700 nm und 2000 nm (14000 cm$^{-1}$ - 5000 cm$^{-1}$). Auch noch vorteilhaft ist der Übergangsbereich zum mittleren Infrarot zwischen 2000 nm und 2500 nm (5000 cm$^{-1}$ - 4000 cm$^{-1}$). Bei zahlreichen Anwendungen ist in diesen Spektralbereichen eine Auflösung von etwa 5 nm bereits ausreichend.

Vorteilhaft wird der lineare elektrooptische Effekt (Pockels-Effekt) genutzt. Es kann aber auch ein anderer elektrooptischer Effekt ausgenutzt werden (Kerr-Effekt). Es kann der transversale aber auch der longitudinale elektrooptische Effekt genutzt werden. Bei letzterem wird vorzugsweise mit transparenten Elektroden gearbeitet.

Als Lichterzeuger 1 oder Lichtquelle Q können beispielsweise Halogenlampen, schwarze Strahler, breitbandige Faserlichtquellen, also dotierte und optisch gepumpte Glasfasern, oder auch breitbandige Halbleiterquellen eingesetzt werden. Insbesondere kann eine Kombination mehrerer unterschiedlicher Lichterzeuger, beispielsweise unterschiedlich dotierter Fasern, vorteilhaft sein, da dadurch ein breiterer Spektralbereich abdeckbar ist.

Als Proben 3 kommen gasförmige, flüssige und auch feste Stoffe in Frage. Es ist auch möglich, dass die Probe gleichzeitig auch Lichterzeuger ist, beispielsweise im Falle floureszierender Proben.

Vorteilhaft ist die Probe 3 im Lichtweg L nach dem elektrooptischen Element 5 angeordnet, da dann die Probe 3 kein störenden Einfluss auf die Strahlqualität im Kristall 5 hat. Noch vorteilhafter ist die Probe 3 dort in dem Lichtweg L angeordnet, wo die Teilstrahlen L1,L2 bereits zur Interferenz gebracht sind. Im Prinzip kann die Probe 3 aber an einer beliebigen Stelle im Lichtweg angeordnet sein, an welcher beide Teilstrahlen L1,L2 sie durchlaufen.

Bezugszeichenliste

| | |
|---|---|
| 1 | Lichterzeuger |
| 2 | (erster) Polarisator |
| 3 | Probe |
| 4 | Analysator, als Analysator wirkender Polarisator |
| 5 | (erstes) elektrooptisches Element, elektrooptisch aktiver Kristall |
| 5' | zweites elektrooptisches, elektrooptisch aktiver Kristall |
| 5a,5a' | Elektroden |
| 6 | Phasenverzögerer, Kompensator |
| 7 | Detektor, Photodiode |
| 8 | Signalverarbeitung |
| 9 | Teilstrahlerzeugungsmittel, Strahlteiler, 45°-Kopplungsstelle |
| 10 | Signalleitung |
| 11 | Spiegel |
| 12 | Detektions-Auswerte-Einheit |
| 13 | Strahlteiler |
| 14 | Verspiegelung |
| c | optische Achse eines uniaxialen Kristalls |
| d | Elektrodenabstand, Kristalldicke |
| D | Strecke, auf der das Licht den elektrooptischen Effekt erfährt |
| E,E' | elektrisches Feld |
| L | Licht, Lichtstrahl, Lichtweg |
| L1 | Teilstrahl, Teil-Lichtweg |
| L2 | Teilstrahl, Teil-Lichtweg |
| Q | Lichtquelle |
| S | Strahlrichtung |
| V,V(t),V',V'(t) | elektrische Spannung |
| $w_0$ | halber Durchmesser der Strahltaille des Lichtstrahles |
| $Z_R$ | Raleigh-Länge |
| $\Delta s$ | Wegunterschied |

**Patentansprüche**

1. Spektrometer umfassend

- eine Lichtquelle (Q) zur Erzeugung eines einen Lichtweg (L) beschreibenden Lichtstrahles (L) aus kollimiertem polychromatischen Licht (L),
- ein Teilstrahlerzeugungsmittel (9), durch welches das Licht (L) in zwei linear polarisierte Teilstrahlen (L1,L2) zerlegbar ist,
- eine Detektions-Auswerte-Einheit (12) zur Detektion des Lichtes (L; L1,L2), zur Erzeugung eines Interferogramms durch Messung der Intensität des Lichtes als Funktion eines Wegunterschiedes $\Delta s$ zwischen den zwei Teilstrahlen (L1,L2) und zur Bestimmung eines Spektrums mittels einer Fourier-Transformation des Interferogramms,

**dadurch gekennzeichnet, dass**

zur Erzeugung des Wegunterschiedes Δs zwischen den zwei Teilstrahlen (L1,L2) mindestens ein elektrooptisches Element (5) auf dem Lichtweg (L) angeordnet ist, welches zur Erzeugung eines veränderbaren elektrischen Feldes E in dem mindestens einen elektrooptischen Element (5) mit einer veränderbaren elektrischen Spannung V beaufschlagbar ist.

2.  Spektrometer gemäss Anspruch 1, **dadurch gekennzeichnet, dass** das mindestens eine elektrooptische Element (5) im wesentlichen ein elektrooptisch aktiver Kristall (5) oder ein elektrooptischer Wellenleiter ist.

3.  Spektrometer gemäss einem der vorangegangenen Ansprüche, **dadurch gekennzeichnet, dass** eine Vielzahl von elektrooptischen Elementen (5) auf dem Lichtweg (L) angeordnet ist.

4.  Spektrometer gemäss einem der vorangegangenen Ansprüche, **dadurch gekennzeichnet, dass** das mindestens eine elektrooptische Element (5) derart geformt oder verspiegelt ist, dass das Licht (L) innerhalb des mindestens einen elektrooptischen Elements (5) mehrfach reflektiert wird.

5.  Spektrometer gemäss Anspruch 4, **dadurch gekennzeichnet, dass** das Licht (L) in dem mindestens einen elektrooptischen Element (5) derart reflektierbar ist, dass der Lichtstrahl (L) in sich selbst reflektiert wird.

6.  Spektrometer gemäss einem der vorangegangenen Ansprüche, **dadurch gekennzeichnet, dass** das mindestens eine elektrooptische Element (5) ein kristallines elektrooptisch aktives Material einer der Kristallklassen 4, 422, 4mm, $\underline{4}$2m, $\underline{4}$, 6, $\underline{6}$22, 6mm, 23 und $\underline{4}$3m beinhaltet.

7.  Spektrometer gemäss einem der vorangegangenen Ansprüche, **dadurch gekennzeichnet, dass** das mindestens eine elektrooptische Element (5) ein kristallines elektrooptisch aktives Material der kubischen Kristallklasse $\underline{4}$3m beinhaltet, dass das elektrische Feld E parallel zu einer [1,1,0]-Richtung des elektrooptisch aktiven Materials verlaufend ist, und dass der Lichtweg (L) in dem mindestens einen elektrooptischen Element (5) zumindest teilweise entlang einer [1,-1,0]-Richtung des kristallinen elektrooptisch aktiven Materials verlaufend ist.

8.  Spektrometer gemäss einem der vorangegangenen Ansprüche, **dadurch gekennzeichnet, dass** das Licht (L) zumindest teilweise in einer optischen Faser geführt ist.

9.  Spektrometer gemäss einem der vorangegangenen Ansprüche, **dadurch gekennzeichnet, dass** mindestens ein erstes elektrooptisches Element (5) und mindestens ein zweites elektrooptisches Element (5') auf dem Lichtweg (L) angeordnet sind, welche eine feldunabhängige Doppelbrechung aufweisen, und welche zur Erzeugung von veränderbaren elektrischen Feldern E beziehungsweise E' in dem ersten elektrooptischen Element (5) beziehungsweise in dem zweiten elektrooptischen Element (5') mit veränderbaren elektrischen Spannungen V beziehungsweise V' beaufschlagbar sind, und welche elektrooptischen Elemente (5,5') gleiche optische und elektrooptische Eigenschaften aufweisen, wobei eine kristalline Orientierung der elektrooptischen Elemente (5,5') und eine Orientierung der elektrischen Felder E,E' derart gewählt ist, dass Veränderungen des Lichts (L), die durch die feldunabhängige Doppelbrechung in dem ersten elektrooptischen Element (5) hervorgerufen werden, Veränderungen des Lichts (L), die durch die feldunabhängige Doppelbrechung in dem zweiten elektrooptischen Element (5') hervorgerufen werden, kompensieren.

10. Spektrometer gemäss einem der vorangegangenen Ansprüche, **dadurch gekennzeichnet, dass** das mindestens eine elektrooptische Element (5) ein elektrooptisch aktives Material beinhaltet, welches mindestens eine akustische Resonanzfrequenz aufweist, und dass die Spannung V mit einer Frequenz verändert wird, die einer solchen akustischen Resonanzfrequenz entspricht.

11. Spektrometer gemäss einem der vorangegangenen Ansprüche, **dadurch gekennzeichnet, dass** die zwei Teilstrahlen (L1,L2) zueinander orthogonal polarisierte Teilstrahlen (L1,L2) sind, und dass ein als Analysator (4) wirkender Polarisator (4) auf dem Lichtweg (L) nach dem mindestens einen elektrooptischen Element (5) angeordnet ist.

12. Spektrometer gemäss einem der Ansprüche 1 bis 10, **dadurch gekennzeichnet, dass** das Teilstrahlerzeugungsmittel (9) einen Strahlteiler (9) beinhaltet, der derart im Lichtweg (L) angeordnet ist, dass die zwei Teilstrahlen (L1,L2) zwei voneinander verschiedene Teil-Lichtwege (L1;L2) beschreiben, wobei jeder der zwei Teil-Lichtwege (L1;L2) zur Reflexion des jeweiligen Teil-Lichtstrahls (L1;L2) einen Spiegel (11) beinhaltet, wobei die zwei Teil-Lichtstrahlen (L1;L2) zur Interferenz bringbar sind, und wobei das mindestens eine elektrooptische Element (5) in einem der zwei Teil-Lichtwege (L1;L2) angeordnet ist.

13. Spektrometer gemäss 12, **dadurch gekennzeichnet, dass** mindestens ein zweites elektrooptisches Element (5') aufgewiesen wird, und dass in einem ersten der zwei Teil-Lichtwege (L1,L2) das mindestens eine elektrooptische Element (5) und in dem zweiten der zwei Teil-Lichtwege (L1,L2) das mindestens eine zweite elektrooptische Element (5') angeordnet ist.

14. Spektrometer gemäss 13, **dadurch gekennzeichnet, dass** das zweite elektrooptische Element (5') mit einer veränderbaren Spannung V' beaufschlagbar ist, welche betragsmässig gleich gross ist wie die veränderbare Spannung V.

15. Verfahren zur Bestimmung eines optischen Spektrums, wobei aus einem Lichtstrahl (L) kollimierten polychromatischen Lichts (L) zwei linear polarisierte Teilstrahlen (L1,L2) erzeugt werden, wobei zwischen den beiden Teilstrahlen (L1,L2) ein veränderbarer Wegunterschied $\Delta s$ erzeugt wird, und wobei mittels einer Detektions-Auswerte-Einheit (12)

- der Lichtstrahl (L) detektiert wird,
- ein Interferogramm erzeugt wird, indem die detektierte Intensität des Lichtstrahles (L) als Funktion des Wegunterschiedes $\Delta s$ zwischen den zwei Teilstrahlen (L1,L2) gemessen wird, und
- das optische Spektrum bestimmt wird, indem das Interferogramm fourier-transformiert wird,

**dadurch gekennzeichnet, dass** der Wegunterschied $\Delta s$ zumindest teilweise durch mindestens ein auf dem Lichtweg (L) angeordnetes elektrooptisches Element (5) erzeugt wird, welches elektrooptische Element (5) zur Erzeugung eines veränderbaren elektrischen Feldes E in dem mindestens einen elektrooptischen Element (5) mit einer veränderbaren elektrischen Spannung V beaufschlagt wird.

Fig. 1

Fig. 2

Fig. 3a

Fig. 3b

Fig. 3c

Fig. 3d

Fig. 3e

Fig. 10

**Fig. 4**

**Fig. 5**

**Fig. 6**

EP 1 515 126 A1

Fig. 7

Fig. 8

Fig. 9

20

**Fig. 11**

**Fig. 12**

# EP 1 515 126 A1

**Europäisches Patentamt**

## EUROPÄISCHER RECHERCHENBERICHT

Nummer der Anmeldung

EP 03 40 5676

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | J. HOWARD: "Electro-optically modulated polarizing Fourier-transform spectrometer for plasma spectroscopy applications" APPLIED OPTICS, Bd. 41, Nr. 1, 1. Januar 2002 (2002-01-01), Seiten 197-208, XP002270493 * Absatz '03.B! * * Abbildung 3 * --- | 1-15 | G01J3/45 |
| A | BENKELFAT B-E ET AL: "An electro-optic modulation technique for direct and accurate measurement of birefringence" OPTICS COMMUNICATIONS, NORTH-HOLLAND PUBLISHING CO. AMSTERDAM, NL, Bd. 221, Nr. 4-6, 15. Juni 2003 (2003-06-15), Seiten 271-278, XP004431549 ISSN: 0030-4018 * Zusammenfassung; Abbildung 1 * ----- | 1-15 | |

**RECHERCHIERTE SACHGEBIETE (Int.Cl.7)**

G01J

Der vorliegende Recherchenbericht wurde für alle Patentansprüche erstellt

| Recherchenort | Abschlußdatum der Recherche | Prüfer |
|---|---|---|
| DEN HAAG | 16. Februar 2004 | Rasmusson, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................................
& : Mitglied der gleichen Patentfamilie, übereinstimmendes Dokument

EPO FORM 1503 03 82 (P04C03)

22